# EUROPÄISCHE PATENTSCHRIFT

(11) **EP 4 162 177 B1**
(45) Veröffentlichungstag und Bekanntmachung des Hinweises auf die Patenterteilung: **20.03.2024**
(21) Anmeldenummer: 21727394.5
(22) Anmeldetag: 14.05.2021
(51) Int. Cl.: F16H 57/12

(54) **VERFAHREN UND STEUERGERÄT ZUM BETREIBEN EINER GETRIEBEVORRICHTUNG UND GETRIEBEVORRICHTUNG**
METHOD AND CONTROL DEVICE FOR OPERATING A TRANSMISSION DEVICE AND TRANSMISSION DEVICE
PROCÉDÉ ET DISPOSITIF DE COMMANDE PERMETTANT DE FAIRE FONCTIONNER UN DISPOSITIF DE TRANSMISSION ET DISPOSITIF DE TRANSMISSION

(30) Priorität: 05.06.2020 DE 102020115003
(43) Veröffentlichungstag der Anmeldung: 12.04.2023
(73) Patentinhaber: KNORR-BREMSE Systeme für Nutzfahrzeuge GmbH, 80809 München (DE)
(72) Erfinder: LÜBSTORF, Mario, 42489 Wülfrath (DE); LICHTENSTEIN, Markus, 51109 Köln (DE)
(86) Internationale Anmeldenummer: PCT/EP2021/062834
(87) Internationale Veröffentlichungsnummer: WO 2021/244834

(56) Entgegenhaltungen:
- DE-A1- 1 425 745
- DE-A1-102010 053 581
- JP-A- 2003 033 084
- JP-A- 2019 095 021

## Beschreibung

Die vorliegende Erfindung bezieht sich auf ein Verfahren zum Betreiben einer Getriebevorrichtung, auf ein entsprechendes Steuergerät und auf eine Getriebevorrichtung.

Bei einem Getriebe kann ein Spiel des Getriebes zum Beispiel durch eine Erhöhung einer Verzahnungsqualität reduziert werden oder durch federbelastete Verspannung von Teilgetrieben verdeckt werden.

Die JP 2019 095021 A offenbart eine Antriebsvorrichtung, die ausgebildet ist, um ein erstes Antriebsmittel und ein zweites Antriebsmittel anzutreiben, um einen Verbraucher zu betreiben. Die Antriebsvorrichtung umfasst: eine Einstelleinrichtung und eine Steuereinrichtung. Die Einstelleinrichtung ist ausgebildet, um eine Last einzustellen, so dass die Drehmomentübertragungsrichtungen der ersten Antriebseinrichtung und der zweiten Antriebseinrichtung in Bezug auf eine Endstufe des Getriebes zum Antreiben des Verbrauchers einander entgegengesetzt sind. Die Steuereinrichtung ist ausgebildet, um auf der Grundlage der eingestellten Last die erste Antriebseinrichtung und die zweite Antriebseinrichtung zu steuern und die Last so zu ändern, wie sich der Betrieb des Verbrauchers ändert.

Vor diesem Hintergrund ist es die Aufgabe der vorliegenden Erfindung, ein verbessertes Verfahren zum Betreiben einer Getriebevorrichtung, ein verbessertes Steuergerät und eine verbesserte Getriebevorrichtung schaffen.

Diese Aufgabe wird durch ein Verfahren zum Betreiben einer Getriebevorrichtung, durch ein entsprechendes Steuergerät und durch eine Getriebevorrichtung gemäß den Hauptansprüchen gelöst.

Gemäß Ausführungsformen kann zur Verdeckung eines Spiels eines Getriebes ein redundanter Aktor, insbesondere ein elektrischer Aktor, und zumindest ein redundanter Getriebezweig verwendet werden. Anders ausgedrückt kann eine Verdeckung eines Spiels von Getrieben beispielsweise durch eine Getriebestruktur mit redundanten, unabhängigen Strängen und geeignete Ansteuerung von redundanten Aktoren erreicht werden. Die Aktoren können hierbei für Momentanforderungen unterhalb eines vordefinierten Grenzwertes so gegeneinander verspannt werden, dass ein Spiel des Getriebes verdeckt werden kann, und oberhalb eines vordefinierten Grenzwertes gemeinsam zu einem Ausgangsdrehmoment beitragen.

Vorteilhafterweise kann gemäß Ausführungsformen das Spiel eines Getriebes derart verdeckt werden, dass eine uneingeschränkte Verwendung des Getriebes ermöglicht wird, ohne dafür eine Verzahnungsqualität steigern zu müssen. Die Verdeckung des Spiels kann auch verschleißunabhängig erbracht werden. Somit kann gemäß Ausführungsformen eine Verdeckung des Spiels eines Getriebes durch Verspannung zweier Getriebestränge durch separat ausgeführte Aktoren unabhängig von Verzahnungsqualität und Verschleiß erreicht werden. Die resultierende Getriebevorrichtung kann somit über Redundanzen für Getriebe und Antriebe verfügen, sodass abhängig von einem jeweiligen Anwendungsfall sowohl Getriebe als auch Aktoren kleiner dimensioniert werden können. Bei Einsatz in Anwendungen, in denen eine redundante Auslegung von Teilen des Getriebes aus Gründen der Ausfallsicherheit gegeben ist, kann die Verdeckung des Spiels gemäß Ausführungsformen einen zusätzlichen finanziellen Aufwand reduzieren. Auch kann durch Verwendung von redundant ausgeführten Aktoren eine Ausfallsicherheit eines Getriebes erhöht werden.

Es wird ein Verfahren zum Betreiben einer Getriebevorrichtung mit einer Getriebeeinheit, einem ersten Aktor und einem zweiten Aktor vorgestellt. Dabei weist die Getriebeeinheit eine Abtriebswelle zum Bereitstellen eines Ausgangsdrehmoments der Getriebevorrichtung, einen ersten Getriebestrang und einen zweiten Getriebestrang auf. Der erste Getriebestrang und der zweite Getriebestrang sind abtriebsseitig drehmomentübertragungsfähig mit der Abtriebswelle gekoppelt. Der erste Getriebestrang ist antriebsseitig drehmomentübertragungsfähig mit dem ersten Aktor gekoppelt und der zweite Getriebestrang ist antriebsseitig drehmomentübertragungsfähig mit dem zweiten Aktor gekoppelt. Dabei ist der erste Aktor ausgebildet, um ein erstes Eingangsdrehmoment in den ersten Getriebestrang einzukoppeln und der zweite Aktor ist ausgebildet, um ein zweites Eingangsdrehmoment in den zweiten Getriebestrang einzukoppeln.

Das Verfahren umfasst dabei die folgenden Schritte:
Einlesen eines Anforderungssignals, das einen angeforderten Wert für das Ausgangsdrehmoments repräsentiert;
Bestimmen eines ersten Steuersignals zum Ansteuern des ersten Aktors und eines zweiten Steuersignals zum Ansteuern des zweiten Aktors unter Verwendung des Anforderungssignals. Dabei bewirken die Steuersignale Eingangsdrehmomente, die abtriebsseitig an der Abtriebswelle Momente mit unterschiedlichen Vorzeichen und mit unterschiedlichen, von null verschiedenen Absolutbeträgen bewirken, wenn das Anforderungssignal einen in einem ersten Wertebereich liegenden angeforderten Wert des Ausgangsdrehmoments repräsentiert. Dagegen bewirken die Steuersignale Eingangsdrehmomente, die abtriebsseitig an der Abtriebswelle Momente mit gleichem Vorzeichen und mit gleichen, von null verschiedenen Absolutbeträgen bewirken, wenn das Anforderungssignal einen in einem von dem ersten Wertebereich unterschiedlichen, zweiten Wertebereich liegenden angeforderten Wert des Ausgangsdrehmoments repräsentiert; und

Ausgeben des ersten Steuersignals an den ersten Aktor und des zweiten Steuersignals an den zweiten Aktor, um das erste Eingangsdrehmoment und das zweite Eingangsdrehmoment zu erzeugen.

Die Getriebevorrichtung kann als ein Teil eines elektromechanischen Lenksystems für ein Fahrzeug, wie beispielsweise als ein Teil eines sogenannten Single Pinion EPS (EPS = Electric Power Steering; elektrische Hilfskraftlenkung), eines sogenannten Dual Pinion EPS, eines sogenannten Column EPS (C-EPS), Rack EPS (R-EPS), eines anderen elektromechanischen Lenksystems oder eines sogenannten Momentüberlagerungslenksystems (TOS = Torque Overlay Steering), oder für eine andere Art von Getriebeantrieb verwendet werden. Das Anforderungssignal kann von einer Schnittstelle zu einer Benutzereingabeeinrichtung, einer Erfassungseinrichtung und zusätzlich oder alternativ einer Steuereinrichtung eingelesen werden. Bei einer Ausführung der Getriebevorrichtung als ein Teil eines elektromechanischen Lenksystems für ein Fahrzeug kann das Anforderungssignal von einer Schnittstelle zu einer Erfassungseinrichtung zum Erfassen eines Lenkwinkels und zusätzlich oder alternativ eines Lenkmoments eingelesen werden. Der erste Aktor kann ausgebildet sein, um das erste Eingangsdrehmoment ansprechend auf das erste Steuersignal zu erzeugen und in den ersten Getriebestrang einzukoppeln. Der zweite Aktor kann ausgebildet sein, um das zweite Eingangsdrehmoment ansprechend auf das zweite Steuersignal zu erzeugen und in den zweiten Getriebestrang einzukoppeln.

Die von den Steuersignalen bewirkten Eingangsdrehmomente können über die Getriebestränge übertragen und bezogen auf die Getriebestränge abtriebsseitig in die Abtriebswelle eingekoppelt werden. Die auf diese Weise in die Abtriebswelle eingekoppelten Momente können Drehmomente repräsentieren, die in Summe das Ausgangsdrehmoment bewirken können. Der erste Wertebereich kann Absolutbeträge für das angeforderte Ausgangsdrehmoment umfassen, die geringe angeforderte Ausgangsdrehmomente repräsentieren. Der zweite Wertebereich kann Absolutbeträge für das angeforderte Ausgangsdrehmoment umfassen, die größer als die im ersten Wertebereich enthaltenen Absolutbeträge sind. Insbesondere kann der erste Wertebereich Absolutbeträge größer null und kleiner oder gleich einem vordefinierten Schwellenwertumfassen. Der zweite Wertebereich kann Absolutbeträge größer als der vordefinierte Schwellenwert umfassen. Die Getriebestränge können jeweils zumindest ein Getriebeelement, beispielsweise ein Zahnrad, umfassen. Die Getriebestränge können das gleiche Übersetzungsverhältnis aufweisen.

Gemäß einer Ausführungsform können im Schritt des Bestimmens die Steuersignale Eingangsdrehmomente bewirken, die abtriebsseitig an der Abtriebswelle Momente mit unterschiedlichen Vorzeichen und mit gleichen, von null verschiedenen Absolutbeträgen bewirken, wenn das Anforderungssignal einen angeforderten Wert des Ausgangsdrehmoments von null repräsentiert. Eine solche Ausführungsform bietet den Vorteil, dass auch im lastfreien Zustand der Getriebevorrichtung ein Spiel zuverlässig verdeckt oder reduziert werden kann. Gemäß einer Ausführungsform kann einer der Aktoren solange ein konstantes Eingangsdrehmoment aufbringen, wie das angeforderte Ausgangsdrehmoment gleich Null ist oder vom ersten Wertebereich umfasst ist. Der andere der Aktoren kann dagegen ein Eingangsdrehmoment aufbringen, das mit steigenden angeforderten Ausgangsdrehmomenten ansteigt. Dabei kann das Eingangsdrehmoment desjenigen der Aktoren ansteigen, dessen Eingangsdrehmoment eine Drehung der Abtriebswelle in der angeforderten Richtung bewirkt. Der Übergang des angeforderten Ausgangsdrehmoments von den im ersten Wertebereich umfassten Werten zu den im zweiten Wertebereich umfassten Werten kann eine Vorzeichenumkehr und betragsmäßige Steigerung des Eingangsdrehmoments des Aktors bewirken, dessen Eingangsdrehmoment während des ersten Wertebereichs konstant war.

Auch kann im Schritt des Bestimmens ein Schwellenwertvergleich des angeforderten Wertes des Ausgangsdrehmoments mit zumindest einem vordefinierten Schwellenwert für einen Absolutbetrag des Ausgangsdrehmoments durchgeführt werden, um den angeforderten Wert des Ausgangsdrehmoments bei Unterschreiten des Schwellenwerts dem ersten Wertebereich und bei Überschreiten des Schwellenwerts dem zweiten Wertebereich zuzuordnen. Somit kann der erste Wertebereich geringere Absolutbeträge des Ausgangsdrehmoments umfassen als der zweite Wertebereich. Eine solche Ausführungsform bietet den Vorteil, dass auf einfache und schnelle Weise auf eine Drehmomentanforderung reagiert werden kann, um die Aktoren situationsgerecht ansteuern zu können.

Ferner können im Schritt des Bestimmens die Steuersignale Eingangsdrehmomente bewirken, die sich unter Berücksichtigung ihrer Vorzeichen und eines Wirkungsgrades der Getriebeeinheit zu dem Ausgangsdrehmoment addieren. Dies kann für den ersten Wertebereich und für den zweiten Wertebereich gleichermaßen gültig sein. Hierbei können die Eingangsdrehmomente über jedem Wertebereich hinweg von null verschieden sein. Eine solche Ausführungsform bietet den Vorteil, dass der angeforderte Wert des Ausgangsdrehmoments zuverlässig, verschleißunabhängig und spielarm bereitgestellt werden kann.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante des Ansatzes in Form eines Steuergeräts kann die dem Ansatz zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Es wird auch eine Getriebevorrichtung vorgestellt, wobei die Getriebevorrichtung folgende Merkmale aufweist:
eine Ausführungsform des vorstehend genannten Steuergeräts;
die Getriebeeinheit mit der Abtriebswelle, dem ersten Getriebestrang und dem zweiten Getriebestrang; und
den ersten Aktor und den zweiten Aktor, wobei das Steuergerät signalübertragungsfähig mit dem ersten Aktor und dem zweiten Aktor verbunden ist.

Die Steuervorrichtung kann in Verbindung mit bzw. im Zusammenhang mit der Getriebevorrichtung vorteilhaft eingesetzt oder verwendet werden, um die Getriebevorrichtung zu betreiben bzw. einen Betrieb der Getriebevorrichtung zu steuern.

Gemäß einer Ausführungsform können der erste Aktor und der zweite Aktor Elektromotoren sein. Zusätzlich oder alternativ kann die Getriebeeinheit als ein Reduktionsgetriebe ausgeführt sein. Jeder Aktor kann in zwei Drehrichtungen betrieben werden. Das Reduktionsgetriebe kann ausgebildet sein, um eine Drehzahl der Aktoren in eine niedrigere Drehzahl der Abtriebswelle umzusetzen. Eine solche Ausführungsform bietet den Vorteil, dass ein schnelles Ansprechen der Aktoren und/oder eine Erhöhung des Drehmoments insbesondere elektrischer Aktoren ermöglicht wird.

Auch können der erste Getriebestrang und der zweite Getriebestrang identisch zueinander ausgeführt sein. Eine solche Ausführungsform bietet den Vorteil, dass Konstruktion und Betrieb der Getriebevorrichtung einfach und kostengünstig realisiert werden können.

Ferner können der erste Getriebestrang und der zweite Getriebestrang abtriebsseitig direkt oder über eine gemeinsame Getriebestufe mit der Abtriebswelle gekoppelt sein. Somit kann lediglich ein Teil der Getriebeeinheit oder die gesamte Getriebeeinheit redundant ausgeführt sein. Eine solche Ausführungsform bietet den Vorteil, dass je nach Getriebeart die redundanten Getriebestränge in geeigneter Weise ausgeführt sein können.

Dabei kann der erste Getriebestrang ein erstes Planetengetriebe aufweisen und kann der zweite Getriebestrang ein zweites Planetengetriebe aufweisen. Hierbei kann die gemeinsame Getriebestufe eine Segmentwelle aufweisen. Auch können der erste Getriebestrang und der zweite Getriebestrang als eine erste Getriebestufe fungieren, wobei die gemeinsame Getriebestufe als eine zweite Getriebestufe fungieren kann. Eine solche Ausführungsform bietet den Vorteil, dass eine so ausgeführte Getriebeeinheit zuverlässig und verschleißunabhängig als Reduktionsgetriebe mit verdecktem Spiel eingesetzt werden kann.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung einer Getriebevorrichtung gemäß einem Ausführungsbeispiel;
Fig. 2 eine vordere Draufsicht auf eine Getriebevorrichtung gemäß einem Ausführungsbeispiel;
Fig. 3 eine Seitenansicht der Getriebevorrichtung aus Fig. 2;
Fig. 4 ein Ablaufdiagramm eines Verfahrens zum Betreiben gemäß einem Ausführungsbeispiel; und
Fig. 5 ein Drehmoment-Zeit-Diagramm gemäß einem Ausführungsbeispiel.

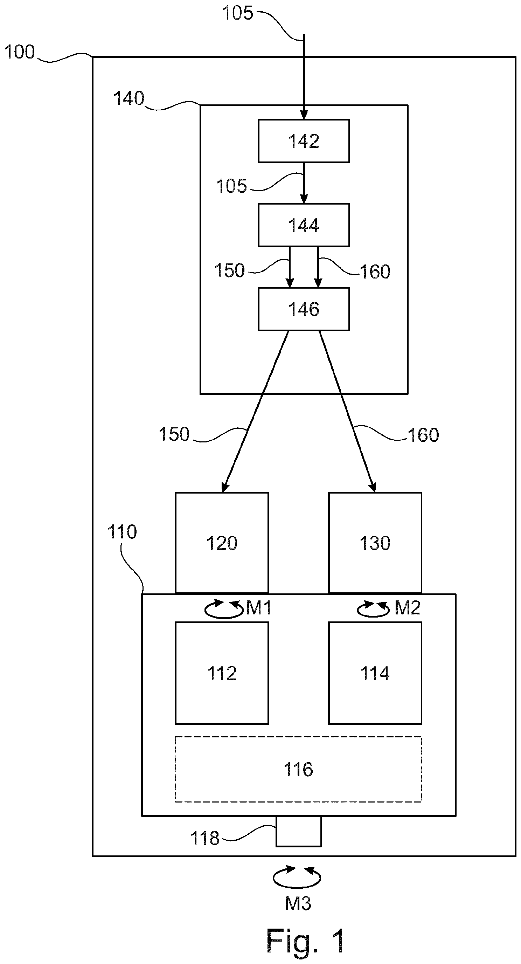

**Fig. 1** zeigt eine schematische Darstellung einer Getriebevorrichtung 100 gemäß einem Ausführungsbeispiel. Die Getriebevorrichtung 100 ist beispielsweise als ein Teil eines elektromechanischen Lenksystems für ein Fahrzeug oder eines anderen Getriebesystems einsetzbar. Die Getriebevorrichtung 100 weist eine Getriebeeinheit 110, einen ersten Aktor 120, einen zweiten Aktor 130 und ein Steuergerät 140 auf. Die Getriebeeinheit 110 ist mit dem ersten Aktor 120 und mit dem zweiten Aktor 130 drehmomentübertragungsfähig gekoppelt. Das Steuergerät 140 ist mit dem ersten Aktor 120 und mit dem zweiten Aktor 130 signalübertragungsfähig gekoppelt. Das Steuergerät 140 ist ausgebildet, um die Getriebevorrichtung 100 zu betreiben.

Insbesondere ist das Steuergerät 140 ausgebildet, um den ersten Aktor 120 und den zweiten Aktor 130 anzusteuern.

Die Getriebeeinheit 110 weist einen ersten Getriebestrang 112, einen zweiten Getriebestrang 114 und eine Abtriebswelle 118 auf. Der erste Getriebestrang 112 und der zweite Getriebestrang 114 sind abtriebsseitig drehmomentübertragungsfähig mit der Abtriebswelle 118 gekoppelt. Gemäß dem hier dargestellten Ausführungsbeispiel sind der erste Getriebestrang 112 und der zweite Getriebestrang 114 abtriebsseitig über eine gemeinsame Getriebestufe 116 mit der Abtriebswelle 118 gekoppelt. Gemäß einem anderen Ausführungsbeispiel sind der erste Getriebestrang 112 und der zweite Getriebestrang 114 abtriebsseitig direkt mit der Abtriebswelle 118 gekoppelt.

Der erste Getriebestrang 112 ist antriebsseitig drehmomentübertragungsfähig mit dem ersten Aktor 120 gekoppelt. Der erste Aktor 120 ist ausgebildet, um ein erstes Eingangsdrehmoment M1 in den ersten Getriebestrang 112 einzukoppeln. Der erste Getriebestrang 112 ist ausgeformt, um unter Verwendung des ersten Eingangsdrehmoments M1 ein durch eine Getriebeübersetzung des ersten Getriebestrangs 112 definiertes Moment auf die Abtriebswelle 118 auszuüben. Der zweite Getriebestrang 114 ist antriebsseitig drehmomentübertragungsfähig mit dem zweiten Aktor 130 gekoppelt. Der zweite Aktor 130 ist ausgebildet, um ein zweites Eingangsdrehmoment M2 in den zweiten Getriebestrang 114 einzukoppeln. Der zweite Getriebestrang 114 ist ausgeformt, um unter Verwendung des zweiten Eingangsdrehmoments M2 ein durch eine Getriebeübersetzung des zweiten Getriebestrangs 114 definiertes Moment auf die Abtriebswelle 118 auszuüben. An der Abtriebswelle 118 ist ein Ausgangsdrehmoment M3 der Getriebevorrichtung 100 bereitstellbar, das sich gemäß diesem Ausführungsbeispiel aus der Summe der von den Getriebesträngen 112, 114 bereitgestellten Moment ergibt.

Das Steuergerät 140 weist eine Einleseeinrichtung 142, eine Bestimmungseinrichtung 144 und eine Ausgabeeinrichtung 146 auf. Die Einleseeinrichtung 142 ist ausgebildet, ein Anforderungssignal 105 einzulesen. Das Anforderungssignal 105 repräsentiert einen angeforderten Wert des Ausgangsdrehmoments M3 der Getriebevorrichtung 100. Das Anforderungssignal 105 ist hierbei von einer hier nicht dargestellten Schnittstelle zu einer Erfassungseinrichtung, Benutzerschnittstelle oder Steuereinrichtung des Lenksystems, der Querführung oder anderen Getriebesystems einlesbar. Auch ist die Einleseeinrichtung 142 ausgebildet, um das Anforderungssignal 105 an die Bestimmungseinrichtung 144 weiterzuleiten. Die Bestimmungseinrichtung 144 ist ausgebildet, um unter Verwendung des Anforderungssignals 105 ein erstes Steuersignal 150 zum Ansteuern des ersten Aktors 120 und ein zweites Steuersignal 160 zum Ansteuern des zweiten Aktors 130 zu bestimmen. Die Bestimmungseinrichtung 144 ist ausgebildet, um das erste Steuersignal 150 und das zweite Steuersignal 160 derart zu bestimmen, dass dieselben Eingangsdrehmomente M1 und M2 bewirken, die wiederum abtriebsseitig an der Abtriebswelle 118 Momente mit unterschiedlichen Vorzeichen und mit unterschiedlichen, von null verschiedenen Absolutbeträgen bewirken, wenn das Anforderungssignal 105 einen in einem ersten Wertebereich liegenden angeforderten Wert des Ausgangsdrehmoments M3 repräsentiert. Ferner ist die Bestimmungseinrichtung 144 ausgebildet, um das erste Steuersignal 150 und das zweite Steuersignal 160 derart zu bestimmen, dass die Eingangsdrehmomente M1 und M2 abtriebsseitig an der Abtriebswelle 118 Momente mit gleichem Vorzeichen und mit gleichen, von null verschiedenen Absolutbeträgen bewirken, wenn das Anforderungssignal 105 einen in einem von dem ersten Wertebereich unterschiedlichen, zweiten Wertebereich liegenden angeforderten Wert des Ausgangsdrehmoments M3 repräsentiert. Die Bestimmungseinrichtung 144 ist auch ausgebildet, um das erste Steuersignal 150 und das zweite Steuersignal 160 an die Ausgabeeinrichtung 146 weiterzuleiten. Die Ausgabeeinrichtung 146 ist ausgebildet, um das erste Steuersignal 150 an den ersten Aktor 120 auszugeben und um das zweite Steuersignal 160 an den zweiten Aktor 130 auszugeben, um das erste Eingangsdrehmoment M1 und das zweite Eingangsdrehmoment M2 zu erzeugen.

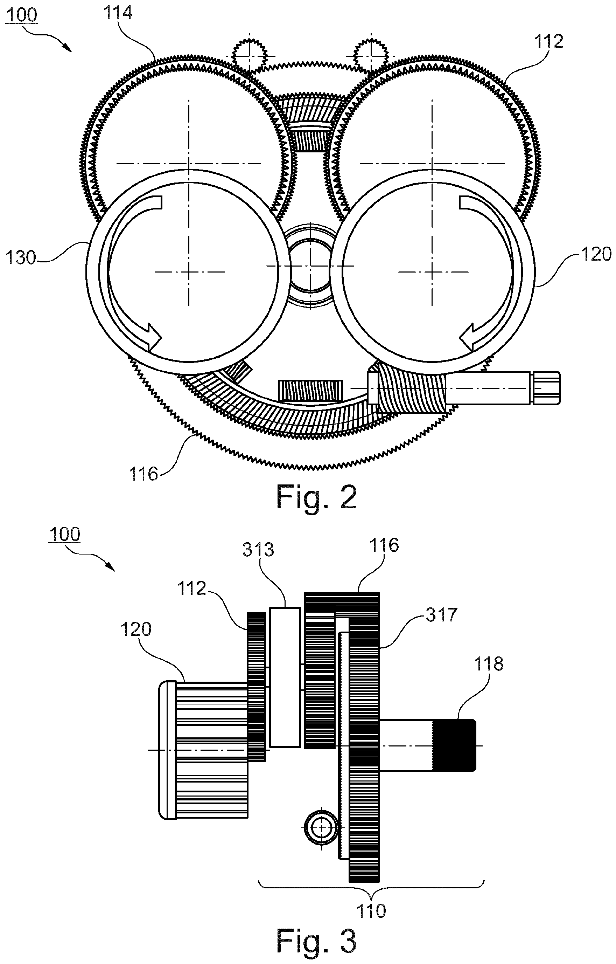

**Fig. 2** zeigt eine vordere Draufsicht auf eine Getriebevorrichtung 100 gemäß einem Ausführungsbeispiel. Die Getriebevorrichtung 100 entspricht oder ähnelt hierbei der Getriebevorrichtung aus Fig. 1. Von der Getriebevorrichtung 100 sind in Fig. 2 gemäß dem hier dargestellten Ausführungsbeispiel der erste Getriebestrang 112, der zweite Getriebestrang 114 und die gemeinsame Getriebestufe 116 der Getriebeeinheit, der erste Aktor 120 und der zweite Aktor 130 gezeigt.

Gemäß dem in Fig. 2 dargestellten Ausführungsbeispiel ist der erste Aktor 120 als ein elektrischer Aktor bzw. Elektromotor ausgeführt und ist der zweite Aktor 130 als ein elektrischer Aktor bzw. Elektromotor ausgeführt. Somit zeigt Fig. 2 anders ausgedrückt einen elektrischen Antrieb mit zwei Getriebesträngen 112 und 114 und zwei elektrischen Aktuatoren bzw. Aktoren 120 und 130. Lediglich beispielhaft sind in Fig. 2 unterschiedliche Drehrichtungen der Aktoren 120 und 130 eingezeichnet. Durch die unterschiedlichen Drehrichtungen ergeben sich Eingangsdrehmomente mit unterschiedlichen Vorzeichen. Somit beziehen sich die eingezeichneten Drehrichtungen auf einen Betrieb der Getriebevorrichtung 100 bei einem angeforderten Wert des Ausgangsdrehmoments in dem ersten Wertebereich, wie in Fig. 1 beschrieben.

Die Getriebeeinheit der Getriebevorrichtung 100 ist gemäß dem hier dargestellten Ausführungsbeispiel als ein Reduktionsgetriebe ausgeführt. Hierbei sind der erste Getriebestrang 112 und der zweite Getriebestrang 114 beispielsweise identisch zueinander ausgeführt. Dabei fungieren der erste Getriebestrang 112 und der zweite Getriebestrang 114 als eine erste Getriebestufe der Getriebeeinheit und fungiert die gemeinsame Getriebestufe 116 als eine zweite Getriebestufe der Getriebeeinheit.

**Fig. 3** zeigt eine Seitenansicht der Getriebevorrichtung 100 aus Fig. 2. Von der Getriebevorrichtung 100 sind in der Darstellung von Fig. 3 dabei die Getriebeeinheit 110 mit dem ersten Getriebestrang 112 als Teil der ersten Getriebestufe einschließlich eines Planetengetriebes 313, der gemeinsamen Getriebestufe 116 als zweiter Getriebestufe einschließlich einer Segmentwelle 317, der Abtriebswelle 118, und der erste Aktor 120 gezeigt. Darstellungsbedingt sind hierbei der zweite Aktor und der zweite Getriebestrang durch den ersten Aktor 120 und den ersten Getriebestrang 112 in der Zeichnung verdeckt. Auch der zweite Getriebestrang weist hierbei ein Planetengetriebe auf.

Insbesondere in der Seitenansicht von Fig. 3 ist erkennbar, dass die erste Getriebestufe mit dem ersten Getriebestrang 112, wie auch dem hier darstellungsbedingt verdeckten zweiten Getriebestrang, zwischen ersten Aktor 120 und dem hier darstellungsbedingt verdeckten zweiten Aktor einerseits und der zweiten Getriebestufe bzw. gemeinsamen Getriebestufe 116 andererseits angeordnet ist. Somit sind die erste Getriebestrang 112 und der hier darstellungsbedingt verdeckte zweite Getriebestrang über die gemeinsame Getriebestufe 116 drehmomentübertragungsfähig mit der Abtriebswelle 118 gekoppelt.

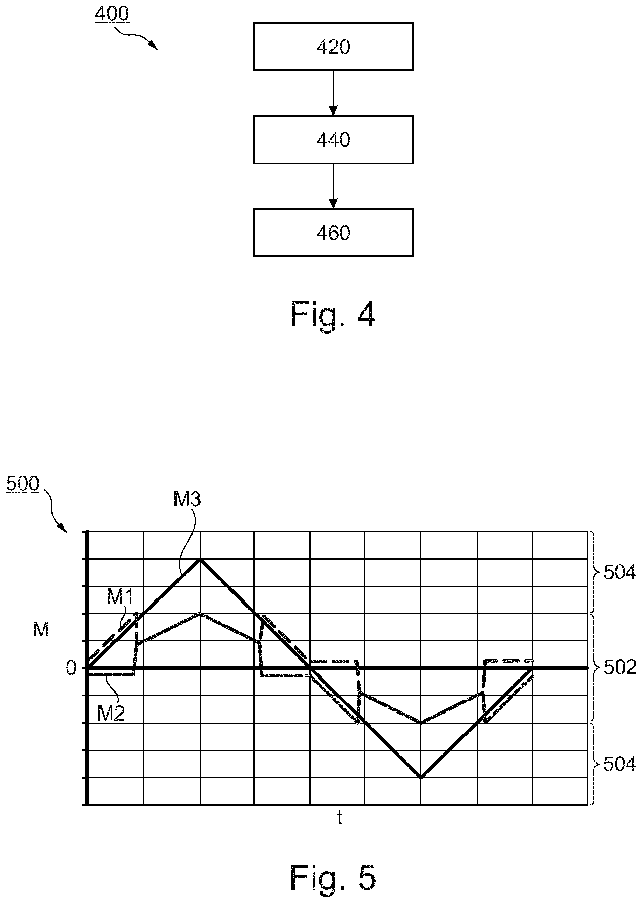

**Fig. 4** zeigt ein Ablaufdiagramm eines Verfahrens 400 zum Betreiben gemäß einem Ausführungsbeispiel. Das Verfahren 400 ist ausführbar, um eine Getriebevorrichtung zu betreiben. Genauer gesagt ist das Verfahren 400 zum Betreiben ausführbar, um die Getriebevorrichtung aus einer der vorstehend beschriebenen Figuren oder eine ähnliche Getriebevorrichtung zu betreiben bzw. einen Betrieb derselben zu steuern.

Hierbei ist das Verfahren 400 zum Betreiben unter Verwendung bzw. mittels des Steuergeräts aus Fig. 1 oder eines ähnlichen Steuergeräts ausführbar. Insbesondere sind die Schritte des Verfahrens 400 zum Betreiben mittels Einrichtungen des Steuergeräts ausführbar, wie beispielsweise der Einleseeinrichtung, der Bestimmungseinrichtung und der Ausgabeeinrichtung des Steuergeräts aus Fig. 1. Das Verfahren 400 zum Betreiben weist einen Schritt 420 des Einlesens, einen Schritt 440 des Bestimmens und einen Schritt 460 des Ausgebens auf.

In dem Schritt 420 des Einlesens wird ein Anforderungssignal eingelesen, das einen angeforderten Wert des Ausgangsdrehmoments der Getriebevorrichtung repräsentiert. Nachfolgend werden in dem Schritt 440 des Bestimmens unter Verwendung des im Schritt 420 des Einlesens eingelesenen Anforderungssignals ein erstes Steuersignal zum Ansteuern des ersten Aktors der Getriebevorrichtung und ein zweites Steuersignal zum Ansteuern des zweiten Aktors der Getriebevorrichtung bestimmt. Dabei bewirken die im Schritt 440 des Bestimmens bestimmten Steuersignale Eingangsdrehmomente, die abtriebsseitig an der Abtriebswelle Momente mit unterschiedlichen Vorzeichen und mit unterschiedlichen, von null verschiedenen Absolutbeträgen hervorrufen, wenn das Anforderungssignal einen in einem ersten Wertebereich liegenden angeforderten Wert des Ausgangsdrehmoments repräsentiert. Ferner bewirken die im Schritt 440 des Bestimmens bestimmten Steuersignale Eingangsdrehmomente, die abtriebsseitig an der Abtriebswelle 118 Momente mit gleichem Vorzeichen und mit gleichen, von null verschiedenen Absolutbeträgen hervorrufen, wenn das Anforderungssignal einen in einem von dem ersten Wertebereich unterschiedlichen, zweiten Wertebereich liegenden angeforderten Wert des Ausgangsdrehmoments repräsentiert. Nachfolgend werden in dem Schritt 460 des Ausgebens das im Schritt 440 des Bestimmens bestimmte erste Steuersignal an den ersten Aktor und das im Schritt 440 des Bestimmens bestimmte zweite Steuersignal an den zweiten Aktor ausgegeben, um das erste Eingangsdrehmoment und das zweite Eingangsdrehmoment zu erzeugen.

Es bewirken gemäß einem Ausführungsbeispiel die im Schritt 440 des Bestimmens bestimmten Steuersignale Eingangsdrehmomente, die sich unter Berücksichtigung ihrer Vorzeichen und eines Wirkungsgrades der Getriebeeinheit zu dem Ausgangsdrehmoment addieren. Gemäß einem Ausführungsbeispiel bewirken die im Schritt 440 des Bestimmens bestimmten Steuersignale Eingangsdrehmomente bewirken, die abtriebsseitig an der Abtriebswelle Momente mit unterschiedlichen Vorzeichen und mit gleichen, von null verschiedenen Absolutbeträgen bewirken, wenn das Anforderungssignal einen angeforderten Wert des Ausgangsdrehmoments von null repräsentiert. Insbesondere wird gemäß einem Ausführungsbeispiel im Schritt 440 des Bestimmens ein Schwellenwertvergleich des angeforderten Wertes des Ausgangsdrehmoments mit zumindest einem vordefinierten Schwellenwert für einen Absolutbetrag des Ausgangsdrehmoments durchgeführt, um den angeforderten Wert des Ausgangsdrehmoments bei Unterschreiten des Schwellenwerts dem ersten Wertebereich und bei Überschreiten des Schwellenwerts dem zweiten Wertebereich zuzuordnen.

**Fig. 5** zeigt ein Drehmoment-Zeit-Diagramm 500 gemäß einem Ausführungsbeispiel. In dem Drehmoment-Zeit-Diagramm 500 sind Drehmomente M in Verbindung mit der Getriebevorrichtung aus einer der vorstehend beschriebenen Figuren oder einer ähnlichen Getriebevorrichtung über der Zeit t aufgetragen. Genauer gesagt sind hierbei das erste Eingangsdrehmoment M1, das zweite Eingangsdrehmoment M2 und das Ausgangsdrehmoment M3 über der Zeit t aufgetragen. Das Ausgangsdrehmoment M3 entspricht hier beispielhaft auch dem durch das Anforderungssignal repräsentierten angeforderten Wert des Ausgangsdrehmoments M3. Ferner sind die erste Wertebereich 502 und der zweite Wertebereich 504 eingezeichnet. Insbesondere zeigt Fig. 5 einen beispielhaften Betrieb der Aktoren der Getriebevorrichtung bei zum Beispiel dreieckförmiger Momentanforderung.

Gemäß einem Ausführungsbeispiel umfasst der erste Wertebereich 502 Absolutbeträge für das Ausgangsdrehmoment M3, die größer Null und kleiner als ein Schwellenwert sind, der zweite Wertebereich 504 Absolutbeträge für das Ausgangsdrehmoment M3, die größer als der Schwellenwert sind, und ein dritter Wertebereich nur den Absolutbetrag Null für das Ausgangsdrehmoment M3. Wie aus Fig. 5 ersichtlich, unterscheiden sich die Eingangsdrehmomente M1 und M2 für die genannten drei Wertebereiche.

Dies führt dazu, das für den ersten Wertebereich 502 Momente auf die Abtriebswelle wirken, die unterschiedliche Absolutbeträge und entgegengesetzte Vorzeichen aufweisen. Für den zweiten Wertebereich 504 wirken Momente auf die Abtriebswelle, die unterschiedliche Absolutbeträge und gleiche Vorzeichen aufweisen. Für den dritten Wertebereich, also im lastfreien Zustand, wirken Momente auf die Abtriebswelle, die gleiche Absolutbeträge jedoch entgegengesetzte Vorzeichen aufweisen.

Auch wenn es in Fig. 5 nicht explizit erkennbar ist, sei darauf hingewiesen, dass ein angeforderter Wert von null des Ausgangsdrehmoments M3 von dem ersten Wertebereich 502 ausgeschlossen ist bzw. außerhalb des ersten Wertebereichs 502 sowie des zweiten Wertebereichs 504 liegt. Der erste Wertebereich 502 und der zweite Wertebereich 504 sind bezogen aufeinander überlappungsfrei. Anders ausgedrückt sind der erste Wertebereich 502 der zweite Wertebereich 504 durch einen Grenzwert bzw. Schwellenwert bezogen auf einen Drehmomentbetrag voneinander getrennt.

In dem Verfahren zum Betreiben aus Fig. 4 wird der Schritt des Bestimmens gemäß dem hier dargestellten Ausführungsbeispiel folgendermaßen ausgeführt und/oder ist das Steuergerät bzw. die Bestimmungseinrichtung desselben aus Fig. 1 folgendermaßen ausgebildet:
Für den ersten Wertebereich 502 bewirken die Steuersignale Eingangsdrehmomente M1 und M2 mit unterschiedlichen Vorzeichen und mit unterschiedlichen, von null verschiedenen Absolutbeträgen.

Für den zweiten Wertebereich 504, der sich von dem ersten Wertebereich 502 unterscheidet, bewirken die Steuersignale Eingangsdrehmomente M1 und M2 mit gleichem Vorzeichen und mit gleichen, von null verschiedenen Absolutbeträgen.

Für den ersten Wertebereich 502 und für den zweiten Wertebereich 504 bewirken die Steuersignale Eingangsdrehmomente M1 und M2, die sich unter Berücksichtigung ihrer Vorzeichen und eines Wirkungsgrades der Getriebeeinheit zu dem Ausgangsdrehmoment M3 addieren.

Die Steuersignale bewirken Eingangsdrehmomente, die abtriebsseitig an der Abtriebswelle Momente mit unterschiedlichen Vorzeichen und mit gleichen, von null verschiedenen Absolutbeträgen bewirken, wenn das Anforderungssignal einen angeforderten Wert des Ausgangsdrehmoments von null repräsentiert.

Es erfolgt ein Schwellenwertvergleich des angeforderten Wertes des Ausgangsdrehmoments M3 mit zumindest einem vordefinierten Schwellenwert für einen Absolutbetrag des Ausgangsdrehmoments M3, um den angeforderten Wert des Ausgangsdrehmoments M3 bei Unterschreiten des Schwellenwerts dem ersten Wertebereich 502 und bei Überschreiten des Schwellenwerts dem zweiten Wertebereich 504 zuzuordnen.

Nachfolgend werden unter Bezugnahme auf die vorstehend beschriebenen Figuren Ausführungsbeispiele und Vorteile von Ausführungsbeispielen nochmals zusammenfassend und mit anderen Worten kurz erläutert.

Die Getriebevorrichtung 100 nutzt redundante elektrische Aktoren 120 und 130, hier ausgeführt durch zwei getrennte elektrische Aktoren 120 und 130, um das Spiel einer durch dieselben angetriebenen Getriebeeinheit 110 oder zumindest eines Teiles davon zu verdecken. Hierzu ist die Getriebeeinheit 110 oder ein Teil davon ebenfalls redundant ausgelegt. Im lastfreien Zustand werden die beiden elektrischen Aktoren 120 und 130 derart angesteuert, dass sie bezogen auf die Ausgangsseite der Getriebeeinheit 110 geringe Eingangsdrehmomente M1 und M2 entgegengesetzten Vorzeichens aufbringen. Dadurch werden beide redundanten Getriebezweige 112 und 114 gegeneinander verspannt. Soll nun ein Ausgangsdrehmoment M3 des einen oder anderen Vorzeichens aufgebracht werden, wird dies durch den in diese Richtung in Anlage befindlichen Aktor 120 oder 130 aufgebracht. Der andere Aktor 120 oder 130 bringt weiterhin ein geringes Eingangsdrehmoment entgegengesetzten Vorzeichens auf. Wird zur Aufbringung des Ausgangsdrehmoments M3 das Eingangsdrehmoment beider Aktoren 120 und 130 benötigt, kann der bisher zur Erreichung der Vorspannung verwendete Aktor 120 oder 130 umgesteuert werden, sodass auch der selbe einen additiven Beitrag zum Ausgangsdrehmoment M3 erbringt. Die Verwendung zweier Aktoren 120 und 130 kann bei Nulldurchgängen der Momentanforderung getauscht werden, um einen gleichmäßigen Verschleiß von Verzahnungskomponenten zu erreichen. Die Verdeckung des Spiels kann bedingt durch das verwendete Prinzip unabhängig von etwaigem Verschleiß von Komponenten über deren gesamte Lebensdauer ermöglicht werden.

Wenn die Getreibestränge 112, 114 unterschiedliche Übersetzungsverhältnise aufweisen, können diese bei der Ansteuerung der elektrischen Aktoren 120 und 130 berücksichtigt werden, indem die Eingangsdrehmomente M1 und M2 unter Verwendung der Übersetzungsverhältnisse angepasst werden.

### BEZUGSZEICHENLISTE

- 100: Getriebevorrichtung
- 105: Anforderungssignal
- 110: Getriebeeinheit
- 112: erster Getriebestrang
- 114: zweite Getriebestrang
- 116: gemeinsame Getriebestufe
- 118: Abtriebswelle
- 120: erster Aktor
- 130: zweite Aktor
- 140: Steuergerät
- 142: Einleseeinrichtung
- 144: Bestimmungseinrichtung
- 146: Ausgabeeinrichtung
- 150: erstes Steuersignal
- 160: zweites Steuersignal
- M1: erstes Eingangsdrehmoment
- M2: zweites Eingangsdrehmoment
- M3: Ausgangsdrehmoment
- 313: Planetengetriebe bzw. Planetenradgetriebe
- 317: Segmentwelle
- 400: Verfahren zum Betreiben
- 420: Schritt des Einlesens
- 440: Schritt des Bestimmens
- 460: Schritt des Ausgebens
- 500: Drehmoment-Zeit-Diagramm
- 502: erster Wertebereich
- 504: zweiter Wertebereich
- M: Drehmoment
- t: Zeit

## Patentansprüche

1. Verfahren (400) zum Betreiben einer Getriebevorrichtung (100), wobei die Getriebevorrichtung (100) einen ersten Aktor (120), einen zweiten Aktor (130) und eine Getriebeeinheit (110) aufweist, wobei die Getriebeeinheit (110) einen ersten Getriebestrang (112), einen zweiten Getriebestrang (114) und eine Abtriebswelle (118) zum Bereitstellen eines Ausgangsdrehmoments (M3) der Getriebevorrichtung (100) aufweist, wobei der erste Getriebestrang (112) und der zweite Getriebestrang (114) abtriebsseitig drehmomentübertragungsfähig mit der Abtriebswelle (118) gekoppelt sind, wobei der erste Getriebestrang (112) antriebsseitig drehmomentübertragungsfähig mit dem ersten Aktor (120) gekoppelt ist, wobei der zweite Getriebestrang (114) antriebsseitig drehmomentübertragungsfähig mit dem zweiten Aktor (130) gekoppelt ist, und wobei der erste Aktor (120) ausgebildet ist, um ein erstes Eingangsdrehmoment (M1) in den ersten Getriebestrang (112) einzukoppeln und der zweite Aktor (130) ausgebildet ist, um ein zweites Eingangsdrehmoment (M2) in den zweiten Getriebestrang (114) einzukoppeln, und wobei das Verfahren (400) folgende Schritte aufweist:
Einlesen (420) eines Anforderungssignals (105), das einen angeforderten Wert des Ausgangsdrehmoments (M3) repräsentiert;
Bestimmen (440) eines ersten Steuersignals (150) zum Ansteuern des ersten Aktors (120) und eines zweiten Steuersignals (160) zum Ansteuern des zweiten Aktors (130) unter Verwendung des Anforderungssignals (105), wobei die Steuersignale (150, 160) Eingangsdrehmomente (M1, M2) bewirken, die abtriebsseitig an der Abtriebswelle (118) Momente mit unterschiedlichen Vorzeichen und mit unterschiedlichen, von null verschiedenen Absolutbeträgen bewirken, wenn das Anforderungssignal (105) einen in einem ersten Wertebereich (502) liegenden angeforderten Wert des Ausgangsdrehmoments (M3) repräsentiert, und wobei die Steuersignale (150, 160) Eingangsdrehmomente (M1, M2) bewirken, die abtriebsseitig an der Abtriebswelle (118) Momente mit gleichem Vorzeichen und mit gleichen, von null verschiedenen Absolutbeträgen bewirken, wenn das Anforderungssignal (105) einen in einem von dem ersten Wertebereich (502) unterschiedlichen, zweiten Wertebereich (504) liegenden
angeforderten Wert des Ausgangsdrehmoments (M3) repräsentiert, und
Ausgeben (460) des ersten Steuersignals (150) an den ersten Aktor (120) und des zweiten Steuersignals (160) an den zweiten Aktor (130), um das erste
Eingangsdrehmoment (M1) und das zweite Eingangsdrehmoment (M2) zu erzeugen,
**dadurch gekennzeichnet, dass** im Schritt (440) des Bestimmens ein Schwellenwertvergleich des angeforderten Wertes des Ausgangsdrehmoments (M3) mit zumindest einem vordefinierten Schwellenwert für einen Absolutbetrag des Ausgangsdrehmoments (M3) durchgeführt wird, um den angeforderten Wert des Ausgangsdrehmoments (M3) bei Unterschreiten des Schwellenwerts dem ersten Wertebereich (502) und bei Überschreiten des Schwellenwerts dem zweiten Wertebereich (504) zuzuordnen.

2. Verfahren (400) gemäß Anspruch 1, **dadurch gekennzeichnet, dass** im Schritt (440) des Bestimmens die Steuersignale (150, 160) Eingangsdrehmomente (M1, M2) bewirken, die abtriebsseitig an der Abtriebswelle (118) Momente mit unterschiedlichen Vorzeichen und mit gleichen, von null verschiedenen Absolutbeträgen bewirken, wenn das Anforderungssignal (105) einen angeforderten Wert des Ausgangsdrehmoments (M3) von null repräsentiert.

3. Verfahren (400) gemäß einem der vorangegangenen Ansprüche, **dadurch gekennzeichnet, dass** im Schritt (440) des Bestimmens die Steuersignale (150, 160) Eingangsdrehmomente (M1, M2) bewirken, die sich unter Berücksichtigung ihrer Vorzeichen und eines Wirkungsgrades der Getriebeeinheit zu dem Ausgangsdrehmoment (M3) addieren.

4. Steuergerät (140), das eingerichtet ist, um die Schritte des Verfahrens (400) gemäß einem der vorangegangenen Ansprüche in entsprechenden Einheiten (142, 144, 146) auszuführen und/oder anzusteuern.

5. Getriebevorrichtung (100), wobei die Getriebevorrichtung (100) folgende Merkmale aufweist:
ein Steuergerät (140) gemäß Anspruch 4;
die Getriebeeinheit (110) mit der Abtriebswelle (118), dem ersten Getriebestrang (112) und dem zweiten Getriebestrang (114); und
den ersten Aktor (120) und den zweiten Aktor (130), wobei das Steuergerät (140) signalübertragungsfähig mit dem ersten Aktor (120) und dem zweiten Aktor (130) verbunden ist.

6. Getriebevorrichtung (100) gemäß Anspruch 5, **dadurch gekennzeichnet, dass** der erste Aktor (120) und der zweite Aktor (130) Elektromotoren sind, und/oder wobei die Getriebeeinheit (110) als ein Reduktionsgetriebe ausgeführt ist.

7. Getriebevorrichtung (100) gemäß einem der Ansprüche 5 bis 6, **dadurch gekennzeichnet, dass** der erste Getriebestrang (112) und der zweite Getriebestrang (114) identisch zueinander ausgeführt sind.

8. Getriebevorrichtung (100) gemäß einem der Ansprüche 5 bis 7, **dadurch gekennzeichnet, dass** der erste Getriebestrang (112) und der zweite Getriebestrang (114) abtriebsseitig direkt oder über eine gemeinsame Getriebestufe (116) mit der Abtriebswelle (118) gekoppelt sind.

9. Getriebevorrichtung (100) gemäß Anspruch 8, **dadurch gekennzeichnet, dass** der erste Getriebestrang (112) ein erstes Planetengetriebe (313) aufweist und der zweite Getriebestrang (114) ein zweites Planetengetriebe aufweist, wobei die gemeinsame Getriebestufe (116) eine Segmentwelle (317) aufweist, wobei der erste Getriebestrang (112) und der zweite Getriebestrang (114) als eine erste Getriebestufe fungieren, wobei die gemeinsame Getriebestufe (116) als eine zweite Getriebestufe fungiert.

## Claims

1. Method (400) for operating a transmission device (100), wherein the transmission device (100) has a first actuator (120), a second actuator (130) and a transmission unit (110), wherein the transmission unit (110) has a first gear train (112), a second gear train (114) and an output shaft (118) for providing an output torque (M3) of the transmission device (100), wherein the first gear train (112) and the second gear train (114) are coupled on the output side in a manner capable of transmitting torque with the output shaft (118), wherein the first gear train (112) is coupled on the input side in a manner capable of transmitting torque with the first actuator (120), wherein the second gear train (114) is coupled on the input side in a manner capable of transmitting torque with the second actuator (130), and wherein the first actuator (120) is designed to feed a first input torque (M1) into the first gear train (112) and the second actuator (130) is designed to feed a second input torque (M2) into the second gear train (114), and wherein the method (400) comprises the following steps:
inputting (420) a request signal (105), which represents a requested value of the output torque (M3),
determining (440) a first control signal (150) for controlling the first actuator (120) and a second control signal (160) for controlling the second actuator (130) using the request signal (105), wherein the control signals (150, 160) trigger input torques (M1, M2), which trigger torques on the output side with different signs and with different non-zero absolute values on the output shaft (118), if the request signal (105) represents a requested value of the output torque (M3) within a first value range (502), and wherein the control signals (150, 160) trigger input torques (M1, M2), which trigger torques on the output side with the same signs and with the same non-zero absolute values on the output shaft (118), if the request signal (105) represents a requested value of the output torque (M3) within a second value range (504) that differs from the first value range (502), and
outputting (460) the first control signal (150) to the first actuator (120) and the second control signal (160) to the second actuator (130), in order to generate the first input torque (M1) and the second input torque (M2),
**characterised in that** in the determining step (440), a threshold value comparison is performed of the requested value of the output torque (M3) with at least one predefined threshold value for an absolute value of the output torque (M3), in order to assign the requested value of the output torque (M3) to the first value range (502) if the threshold value is not reached and to the second value range (504) if the threshold value is exceeded.

2. Method (400) according to claim 1, **characterised in that** in the determining step (440), the control signals (150, 160) trigger input torques (M1, M2), which trigger torques on the output side with different signs and with the same non-zero absolute values on the output shaft (118), if the request signal (105) represents a requested value of the output torque (M3) of zero.

3. Method (400) according to any one of the preceding claims, **characterised in that** in the determining step (440), the control signals (150, 160) trigger input torques (M1, M2) which, taking account of their signs and the efficiency of the transmission unit, add up to the output torque (M3).

4. Control device (140), which is configured to carry out and/or control the method (400) steps according to any one of the preceding claims in the corresponding units (142, 144, 146).

5. Transmission device (100), wherein the transmission device (100) has the following characteristics:
a control device (140) according to claim 4,
the transmission unit (110) with the output shaft (118), the first gear train (112) and the second gear train (114); and
the first actuator (120) and the second actuator (130), wherein the control device (140) is connected in a manner capable of transmitting signals to the first actuator (120) and the second actuator (130).

6. Transmission device (100) according to claim 5, **characterised in that** the first actuator (120) and the second actuator (130) are electric motors, and/or wherein the transmission unit (110) is designed as a reduction gear.

7. Transmission device (100) according to any one of claims 5 to 6, **characterised in that** the first gear train (112) and the second gear train (114) are designed to be identical to each other.

8. Transmission device (100) according to any one of claims 5 to 7, **characterised in that** the first gear train (112) and the second gear train (114) are coupled on the output side directly or via a common gear stage (116) with the output shaft (118).

9. Transmission device (100) according to claim 8, **characterised in that** the first gear train (112) has a first planetary gear (313) and the second gear train (114) has a second planetary gear, wherein the common gear stage (116) has a sector shaft (317), wherein the first gear train (112) and the second gear train (114) act as a first gear stage, wherein the common gear stage (116) acts as a second gear stage.

## Revendications

1. Procédé (400) permettant de faire fonctionner un dispositif de transmission (100), dans lequel le dispositif de transmission (100) présente un premier actionneur (120), un second actionneur (130) et une unité de transmission (110), dans lequel l'unité de transmission (110) présente un premier train de transmission (112), un second train de transmission (114) et un arbre de sortie (118) pour fournir un couple de sortie (M3) du dispositif de transmission (100), dans lequel le premier train de transmission (112) et le second train de transmission (114) sont couplés côté sortie, en étant aptes à la transmission de couple, à l'arbre de sortie (118), dans lequel le premier train de transmission (112) est couplé côté entraînement, en étant apte à la transmission de couple, au premier actionneur (120), dans lequel le second train de transmission (114) est couplé côté entraînement, en étant apte à la transmission de couple, au second actionneur (130), et dans lequel le premier actionneur (120) est conçu pour introduire un premier couple d'entrée (M1) dans le premier train de transmission (112) et le second actionneur (130) est conçu pour introduire un second couple d'entrée (M2) dans le second train de transmission (114), et dans lequel le procédé (400) présente les étapes suivantes :
lecture (420) d'un signal de demande (105) qui représente une valeur demandée du couple de sortie (M3) ;
détermination (440) d'un premier signal de commande (150) pour commander le premier actionneur (120) et un second signal de commande (160) pour commander le second actionneur (130) en utilisant le signal de demande (105), dans lequel les signaux de commande (150, 160) engendrent des couples d'entrée (M1, M2) qui engendrent, côté sortie de l'arbre de sortie (118), des moments avec des signes différents et avec différentes valeurs absolues qui sont différentes de zéro, lorsque le signal de demande (105) représente une valeur demandée du couple de sortie (M3) située dans une première plage de valeurs (502), et dans lequel les signaux de commande (150, 160) engendrent des couples d'entrée (M1, M2) qui engendrent, côté sortie de l'arbre de sortie (118), des moments avec les mêmes signes et avec des valeurs absolues identiques qui sont différentes de zéro, lorsque le signal de demande (105) représente une valeur demandée du couple de sortie (M3) située dans une seconde plage de valeurs (504) qui est différente de la première plage de valeurs (502), et
délivrance (460) du premier signal de commande (150) au premier actionneur (120) et du second signal de commande (160) au second actionneur (130) afin de produire le premier couple d'entrée (M1) et le second couple d'entrée (M2),
**caractérisé en ce que** dans l'étape (440) de détermination, une comparaison des valeurs seuils de la valeur demandée du couple de sortie (M3) est réalisée avec au moins une valeur seuil prédéfinie pour une valeur absolue du couple de sortie (M3) afin d'associer la valeur demandée du couple de sortie (M3) à la première plage de valeurs (502) lorsque la valeur seuil n'est pas atteinte, et à la seconde plage de valeurs (504) lorsque la valeur seuil est dépassée.

2. Procédé (400) selon la revendication 1, **caractérisé en ce que** dans l'étape (440) de détermination, les signaux de commande (150, 160) engendrent des couples d'entrée (M1, M2) qui engendrent des moments, côté sortie sur l'arbre de sortie (118), avec différents signes et avec des valeurs absolues identiques différentes de zéro, lorsque le signal de demande (105) représente une valeur demandée du couple de sortie (M3) de zéro.

3. Procédé (400) selon l'une quelconque des revendications précédentes, **caractérisé en ce que** dans l'étape (440) de détermination, les signaux de commande (150, 160) engendrent des couples d'entrée (M1, M2) qui s'additionnent au couple de sortie (M3) en tenant compte de leurs signes et d'un rendement de l'unité de transmission.

4. Dispositif de commande (140) qui est configuré pour exécuter et/ou commander les étapes du procédé (400) selon l'une quelconque des revendications précédentes dans des unités correspondantes (142, 144, 146).

5. Dispositif de transmission (100), dans lequel le dispositif de transmission (100) présente les caractéristiques suivantes :
un dispositif de commande (140) selon la revendication 4 ;
l'unité de transmission (110) avec l'arbre de sortie (118), le premier train de transmission (112) et le second train de transmission (114) ; et
le premier actionneur (120) et le second actionneur (130), dans lequel le dispositif de commande (140) est relié, en étant apte à la transmission de signal, au premier actionneur (120) et au second actionneur (130).

6. Dispositif de transmission (100) selon la revendication 5, **caractérisé en ce que** le premier actionneur (120) et le second actionneur (130) sont des moteurs électriques, et/ou dans lequel l'unité de transmission (110) est réalisée comme une transmission à réduction.

7. Dispositif de transmission (100) selon l'une quelconque des revendications 5 à 6, **caractérisé en ce que** le premier train de transmission (112) et le second train de transmission (114) sont réalisés identiques l'un à l'autre.

8. Dispositif de transmission (100) selon l'une quelconque des revendications 5 à 7, **caractérisé en ce que** le premier train de transmission (112) et le second train de transmission (114) sont couplés côté sortie directement ou via un niveau de transmission commun (116) à l'arbre de sortie (118).

9. Dispositif de transmission (100) selon la revendication 8, **caractérisé en ce que** le premier train de transmission (112) présente un premier engrenage planétaire (313) et le second train de transmission (114) présente un second engrenage planétaire, dans lequel le niveau de transmission commun (116) présente un arbre segmenté (317), dans lequel le premier train de transmission (112) et le second train de transmission (114) agissent comme un premier niveau de transmission, dans lequel l'étage de transmission commun (116) agit comme un niveau étage de transmission.
